# EUROPÄISCHE PATENTSCHRIFT

(11) **EP 0 842 839 B1**
(45) Veröffentlichungstag und Bekanntmachung des Hinweises auf die Patenterteilung: **10.01.2001**
(21) Anmeldenummer: 97119396.6
(22) Anmeldetag: 06.11.1997
(51) Int. Cl.: B62D 5/06, F16F 9/44, F16F 9/348

(54) **Dämpferventilanordnung**
Damper valve arrangement.
Agencement de soupape d'amortisseur.

(30) Priorität: 14.11.1996 DE 19647130
(43) Veröffentlichungstag der Anmeldung: 20.05.1998
(73) Patentinhaber: DaimlerChrysler AG, 70567 Stuttgart (DE)
(72) Erfinder: Asbrand, Ulrich, 73630 Remshalden (DE); Cakmaz, Aydogan, 70374 Stuttgart (DE); Gutscher, Horst, 71229 Leonberg (DE); Möckel, Wolfgang, 70825 Korntal-Münchingen (DE)

(56) Entgegenhaltungen:
- EP-A- 0 420 610
- DE-A- 4 423 658

## Beschreibung

Die Erfindung betrifft eine Dämpferventilanordnung, geeignet für eine hydraulische Servolenkung, deren Servomotor als hydrostatisches Motoraggregat bzw. als hydraulisches Verdrängeraggregat ausgebildet ist und auch als Lenkungsdämpfer wirkt, indem an Hydraulikleitungen zwischen Servomotor und Servoventil zumindest eine Dämpferventilanordnung vorgesehen ist, mit zumindest einem durch Dämpferventilelemente gesteuerten bzw. gedrosselten Strömungsweg.

Heutige Kraftfahrzeuge sind regelmäßig mit einer Servolenkung ausgerüstet, die zumindest im Falle von Personenkraftwagen typischerweise mit hydraulischer Hilfskraft arbeitet, derart, daß die vom Fahrer bei Betätigung der Fahrzeuglenkung aufzubringenden Kräfte immer hinreichend gering gehalten werden.

Um im Lenksystem Schwingungen weitestgehend zu vermeiden bzw. zu unterdrücken, besitzen praktisch alle Fahrzeuglenkungen einen Lenkungsdämpfer.

In diesem Zusammenhang ist es aus der DE-OS 40 29 156 bekannt, ein als Servomotor dienendes doppeltwirkendes Kolben-Zylinder-Aggregat auch als Lenkungsdämpfer wirken zu lassen, indem in den Leitungen zwischen dem Kolben-Zylinder-Aggregat und dem zu dessen Steuerung dienenden Servoventil, über das das Kolben-Zylinder-Aggregat steuerbar mit einer hydraulischen Druckquelle sowie einem relativ drucklosen Hydraulik-Reservoir verbindbar ist, Dämpferventilanordnungen vorgesehen sind.

Eine prinzipiell ähnliche Anordnung wird in der DE-OS 41 06 310 beschrieben.

Aus der DE-OS 29 27 039 (= GB 2051714 A) ist es bekannt, an den zylinderseitigen Anschlüssen der Leitungen, welche das Servoventil mit dem doppeltwirkenden Kolben-Zylinder-Aggregat einer Servolenkung verbinden, jeweils ein in Richtung zu dem jeweiligen Kolbenarbeitsraum hin sich öffnendes, mit einer Drosseldurchgangsbohrung versehenes Rückschlagventil anzuordnen, dessen Ventilgehäuse von einer Schraube gebildet sein kann, die zur Befestigung der jeweiligen Leitung am Zylinder dient.

Nach der DE 43 23 179 A1 ist zur Vereinfachung der Dämpferventilanordnungen vorgesehen, die Dämpferventile an einem lochscheibenartigen Ventilträgerteil auszubilden, dessen vom Hydraulikmedium durchsetzte Löcher mittels stirnseitig am Ventilträgerteil durch Bolzen gehalterter Ventilplättchen und/oder gefederter Ventilplatten steuerbar sind. Dabei kann vorgesehen sein, das lochscheibenartige Ventilträgerteil nach Art eines Distanzringes oder einer Distanzscheibe zwischen einer Lagerfläche eines am Gehäuse des Servoventiles oder des Servomotors angeordneten Anschlußstutzens und einer Gegenlagerfläche des mit dem Anschlußstutzen verbindbaren Anschlußteiles der Hydraulikleitung einzuspannen.

Statt dessen ist es auch möglich, das Ventilträgerteil im Anschlußstutzen bzw. im Anschlußteil unverlierbar zu haltern, wie es beispielsweise in der DE 44 23 658 A1 dargestellt ist.

Die vorangehend beschriebenen Servolenkungen sind aufgrund der Doppelfunktion des Servomotors, welcher einerseits eine Servokraft erzeugt und andererseits als Lenkungsdämpfer dient, außerordentlich vorteilhaft. Gleichwohl sind derartige Konstruktionen noch recht aufwendig. Denn der in zwei Richtungen antreibbare Servomotor muß auf seinen beiden Seiten mit gleichwirkenden Dämpferventilanordnungen versehen sein, um in beiden Bewegungsrichtungen eine gleiche Dämpferwirkung zu erzielen. Dementsprechend müssen immer paarweise aufeinander abgestimmte Dämpferventilanordnungen vorhanden sein. Da aber bei der Herstellung der Dämpferventilanordnungen unvermeidliche Toleranzen auftreten, bedeutet dies, daß jeweils Paare von Dämpferventilanordnungen mit gleicher Dämpferwirkung zusammengesucht werden müssen.

Aufgabe der Erfindung ist es nun, eine Möglichkeit aufzuzeigen, Dämpferventile mit sehr genau vorgegebenen Eigenschaften herzustellen.

Diese Aufgabe wird bei einer Dämpferventilanordnung der eingangs angegebenen Art dadurch gelöst, daß parallel zum Strömungsweg ein Bypaßkanal mit einem kalibrierbaren Drosselwiderstand angeordnet ist.

Die Erfindung beruht auf dem allgemeinen Gedanken, Fertigungstoleranzen der Dämpferventilanordnung durch die Möglichkeit einer Kalibrierung zu kompensieren. Indem nun erfindungsgemäß durch den Bypaßkanal mit kalibrierbarem Drosselwiderstand eine auch nach Herstellung der Dämpferventilanordnung noch einstellbare Drosselstrecke vorhanden ist, kann die gewünschte Drosselwirkung der Dämpferventilanordnung sehr genau vorgegeben werden, so daß sich praktisch beliebige Dämpferventilanordnungen zu Paaren mit nahezu identischen Parametern zusammenstellen lassen.

Die Erfindung berücksichtigt die Tatsache, daß sich der Drosselwiderstand eines Strömungsweges mit etwa der 5. Potenz des Durchmessers des Strömungsweges ändert und dementsprechend bereits geringfügige Fertigungstoleranzen zu deutlich unterschiedlichen Strömungswiderständen führen. Durch die Möglichkeit der Kalibrierung des Drosselwiderstandes des Bypaßkanales läßt sich dieser unvermeidbare Effekt kompensieren.

Gemäß einer bevorzugten Ausführungsform der Erfindung besitzt die Dämpferventilanordnung ein lochscheibenförmiges Trägerteil mit einem zentralen axialen Zapfen, der einerseits zur Halterung von gefederten Ventilplatten und/oder Ventilfederplättchen zur Steuerung der von den Löchern der Lochscheibe gebildeten Strömungswege dient und andererseits von einem den Bypaßkanal bildenden Axialkanal durchsetzt wird, an dessen einem Stirnende ein einen kalibrierbaren Spalt frei lassendes Drosselelement angeordnet ist.

In besonders bevorzugter Weise ist vorgesehen, daß das Trägerteil unverlierbar in einem einen napfartigen Innenraum aufweisenden Anschlußteil zur Halterung einer Hydraulikleitung gleichachsig zur Schraubachse angeordnet ist und den Innenraum zwischen dem offenen Stirnende und dem geschlossenen Stirnende des Anschlußteiles unterteilt, wobei am geschlossenen Ende des Anschlußteiles ein axial einstellbarer, gleichachsig zum Bypaßkanal angeordneter Stift als Drosselelement angeordnet ist, so daß die Drosselwirkung leicht kalibrierbar wird.

Statt dessen ist es auch möglich und vorteilhaft, den vorgenannten axial einstellbaren Stift durch einen fest am Anschlußteil angeordneten dornartigen Fortsatz zu ersetzen und den Zapfen mit dem Bypaßkanal axial verstellbar am Trägerteil anzuordnen.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung beschrieben werden.

Dabei zeigt
- Fig. 1: eine schaltplanartig schematisierte Darstellung einer hydraulischen Servolenkung mit Dämpferventilen am Servomotor,
- Fig. 2: ein Schnittbild einer ersten Ausführungsform einer erfindungsgemäßen Dämpferventilanordnung,
- Fig. 3: ein Schnittbild einer abgewandelten Ausführungsform und
- Fig. 4: ein Schnittbild einer weiteren Ausführungsform.

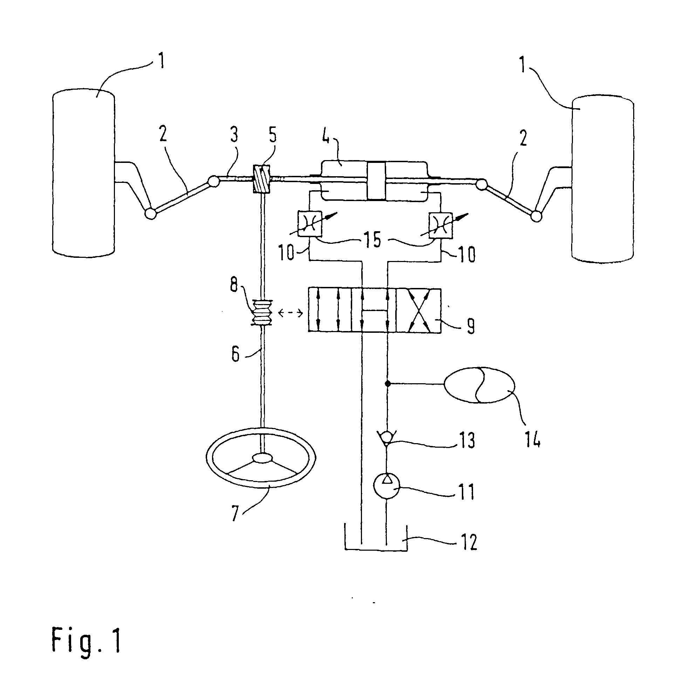

Gemäß Fig. 1 besitzt ein nicht näher dargestelltes Kraftfahrzeug vordere Fahrzeuglenkräder 1, die im dargestellten Beispiel über Spurstangen 2 mit einer Zahnstange 3 verbunden sind, welche gleichachsig in die Kolbenstange eines als Servomotor angeordneten doppeltwirkenden Kolben-Zylinder-Aggregates 4 übergeht bzw. mit der Kolbenstange verbunden ist.

Die Zahnstange 3 kämmt mit einem Ritzel 5, welches über eine Lenksäule 6 mit einem Lenkhandrad 7 antriebsmäßig verbunden ist. In der Lenksäule 6 ist ein drehelastisches Element 8 angeordnet, so daß zwischen Ritzel 5 und Lenkhandrad 7 eine begrenzte Relativdrehung auftreten kann, deren Maß von den zwischen Ritzel 5 und Lenkhandrad 7 übertragenen Kräften und Momenten abhängig ist.

Diese Relativdrehung steuert ein Servoventil 9, welches über Motorleitungen 10 mit den beiden Kammern des Kolben-Zylinder-Aggregates 4 und andererseits mit der Druckseite einer Hydraulikpumpe 11 sowie einem relativ drucklosen Hydraulikreservoir 12 verbunden ist, an das die Saugseite der Pumpe 11 angeschlossen ist.

In der dargestellten Mittellage des Servoventiles 9 sind die beiden Kammern des Kolben-Zylinder-Aggregates 4 miteinander sowie mit dem Reservoir 12 verbunden. Außerdem kann eine Verbindung zur Druckseite der Pumpe 11 bestehen, welche dann ständig laufen kann.

Statt dessen ist es auch möglich, daß in der Mittelstellung des Servoventiles 9 der Ventilanschluß zur Druckseite der Pumpe abgesperrt ist, welche in diesem Falle über ein Rückschlagventil 13 einen Druckspeicher 14 laden kann und in Abhängigkeit vom Ladedruck gesteuert bzw. bei hohem Ladedruck ausgeschaltet wird.

Sobald zwischen Ritzel 5 und Lenkhandrad 7 Kräfte bzw. Drehmomente wirksam sind, wird das Servoventil 9 in der einen oder anderen Richtung aus seiner Mittellage verschoben, mit der Folge, daß zwischen den Motorleitungen 12 eine mehr oder weniger große Druckdifferenz in der einen oder anderen Richtung und damit eine mehr oder weniger große Servokraft des Kolben-Zylinder-Aggregates 4 in der einen oder anderen Richtung erzeugt und die jeweils am Lenkhandrad 7 für ein Lenkmanöver aufzubringende Kraft entsprechend vermindert wird.

Bei der erfindungsgemäßen Lenkung übernimmt das als Servomotor dienende Kolben-Zylinder-Aggregat 4 auch die Funktion eines Lenkungsdämpfers zur Dämpfung schneller Lenkwinkeländerungen der Fahrzeuglenkräder 1. Zu diesem Zweck sind an den Anschlüssen der Leitungen 10 am Kolben-Zylinder-Aggregat 4 jeweils Dämpferventile 15 angeordnet, welche in Fig. 1 als Drosseln dargestellt sind. Aufgrund des Drosselwiderstandes der Dämpferventile 15 werden schnelle Bewegungen des Kolbens, des Kolben-Zylinder-Aggregates 4 und dementsprechend schnelle Lenkverstellungen der Fahrzeuglenkräder 1 gedämpft. Erfindungsgemäß können die Dämpfungswirkungen der Dämpferventile 15 kalibriert werden, wie weiter unten dargestellt und in Fig. 1 durch einstellbare Drosseln angedeutet wird.

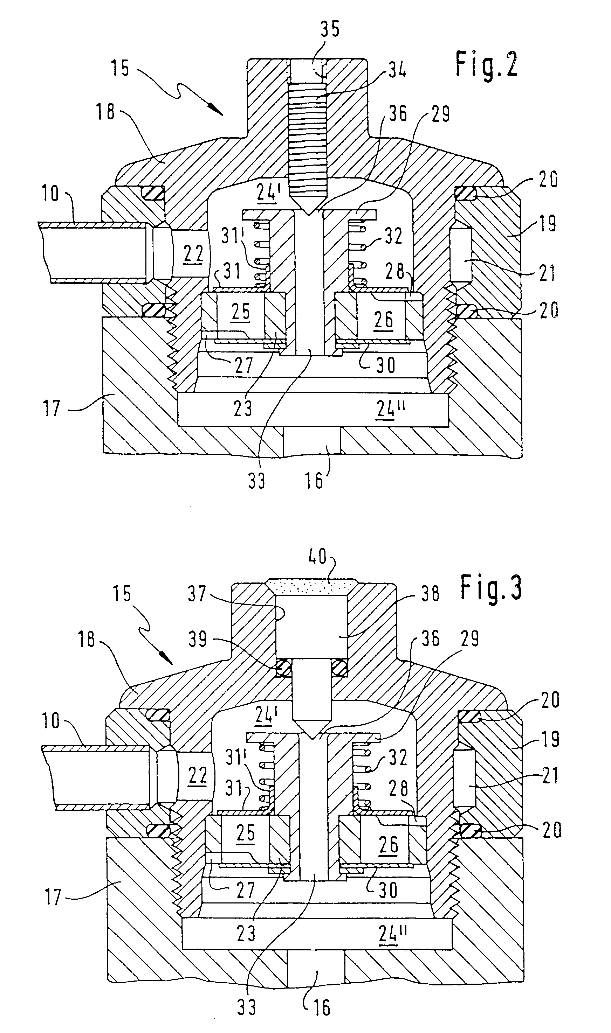

Fig. 2 zeigt nun eine erste Ausführungsform einer Dämpferventilanordnung 15.

Am Kolben-Zylinder-Aggregat 4 ist jede Kammer mit einer Anschlußöffnung 16 versehen, die innerhalb eines Innengewindeteiles 17, gleichachsig zur Gewindeachse, angeordnet ist. In das Innengewindeteil 17 läßt sich ein hutförmiges Anschlußteil 18 mit einem an ihm angeordneten Außengewinde eindrehen, wobei zwischen einander gegenüberliegenden Flanschflächen am Innengewindeteil 17 einerseits und am Anschlußteil 18 andererseits ein mit der Motorleitung 10 fest verbundener Haltering 19 axial einspannbar ist und die Spalte zwischen den Stirnseiten des Halteringes 19 und den zugewandten Flanschflächen von Innengewindeteil 17 und Anschlußteil 18 durch Dichtringe 20 am Haltering 19 druckfest abgesperrt werden.

Der Haltering 19 besitzt auf seinem Innenumfang einen nach Art einer Ringnut ausgebildeten Kanal 21, welcher einerseits mit der Motorleitung 10 und andererseits mit einer oder mehreren Radialbohrungen 22 im Anschlußteil 18 kommuniziert und damit eine Verbindung zwischen der Motorleitung und dem Innenraum des Anschlußteiles 18 herstellt.

Innerhalb des Anschlußteiles 18 ist ein kreisscheibenförmiges Trägerteil 23 fest und unverlierbar gehaltert, welches innerhalb des Anschlußteiles 18 einen an die Radialbohrung bzw. Radialbohrungen 22 anschließenden Raum 24' von einem an die Anschlußöffnung 16 anschließenden Raum 24" abtrennt.

Das Trägerteil 23 besitzt Axialbohrungen 25 und 26, wobei die Axialbohrungen 25 in eine zum Raum 24" geöffnete Vertiefung 27 auf der unteren Stirnseite des scheibenförmigen Trägerteiles 23 und die Axialbohrungen 26 in eine ähnliche Vertiefung 28 auf der in Fig. 2 oberen Stirnseite des Trägerteiles 23 münden.

In einer Zentralöffnung des Trägerteiles 23 ist ein Bolzen 29 gehaltert, welcher auf einer Stirnseite des Trägerteiles 23 - im Beispiel der Fig. 2 auf der der Anschlußöffnung 16 zugewandten Stirnseite - kreisscheibenförmige Federplatten 30 haltert und auf der anderen Stirnseite des Trägerteiles 23 als Axialführung für eine Ringscheibe 31 ausgebildet ist.

Die Federplatten 30 sind so bemessen, daß sie die Axialbohrungen 26 im Trägerteil 23 zumindest weitestgehend überdecken und größere Bereiche der den Axialbohrungen 25 zugeordneten Vertiefungen 27 frei lassen. Die Ringscheibe 31 ist so bemessen, daß sie die Axialbohrungen 25 zu überdecken vermag und die den Axialbohrungen 26 zugeordneten Vertiefungen 28 zumindest bereichsweise frei läßt.

Die Ringscheibe 31 besitzt an ihrem Innenumfangsrand einen hülsenförmigen Fortsatz 31', welcher den Bolzen 29 mit geringem radialen Spiel umfaßt. Zwischen der Ringscheibe 31 und einem am freien Ende des Bolzens 29 angeordneten Flansch ist eine Schraubendruckfeder 32 eingespannt, welche die Ringscheibe 31 gegen das Trägerteil 23 spannt.

Der Bolzen 29 wird von einem Axialkanal 33 durchsetzt, in dessen in Fig. 2 oberes Ende eine konusförmige Spitze einer gleichachsig zum Axialkanal 33 angeordneten Einstellschraube 34 hineinragt, die in einer Gewindebohrung 35 im hutförmigen Boden des Anschlußteiles 18 schraubverstellbar gehaltert ist. Zwischen der Konusspitze der Einstellschraube 34 und dem Rand der zugewandten Stirnöffnung des Axialkanales 33 verbleibt ein Ringspalt 36, dessen Querschnitt durch Schraubverstellung der Einstellschraube 34 kalibrierbar ist.

Nach erfolgter Kalibrierung wird die Einstellschraube 34 in der Gewindebohrung 35 bleibend festgesetzt, beispielsweise durch einen in das Gewinde der Gewindebohrung 35 bzw. der Einstellschraube 34 eingebrachten Kleber, der unter Abdichtung der Einstellschraube 34 in der Gewindebohrung 35 aushärtet.
Die in Fig. 3 dargestellte Ausführungsform unterscheidet sich von der Ausführungsform nach Fig. 2 im wesentlichen dadurch, daß im hutförmigen Boden des Anschlußteiles 18 eine gestufte Bohrung 37 gleichachsig zum Axialkanal 33 angeordnet ist. Diese Bohrung 37 nimmt einen passenden Preßstift 38 auf, der zwischen seinem in Fig. 3 unteren Ende mit dem geringeren Durchmesser und seinem oberen Ende eine Ringstufe aufweist. Innerhalb eines von der Ringstufe der Bohrung 37 und der Ringstufe des Preßstiftes 38 gebildeten Ringraumes ist ein Dichtring 39 angeordnet, welcher den genannten Ringraum nur teilweise ausfüllt, so daß der Preßstift 38 unter Verkleinerung des Ringraumes in Abwärtsrichtung vortreibbar bleibt.

Das dickere Ende des Preßstiftes 38 wird im hinsichtlich des Durchmessers größeren oberen Bereich der Bohrung 37 durch Preßsitz festgehalten.

Der zwischen dem Rand der oberen Stirnöffnung des Axialkanales 33 und der konusförmigen Spitze des Preßstiftes 38 verbleibende Ringspalt 36 läßt sich kalibrieren, indem der Preßstift 38 mehr oder weniger weit axial in Richtung des Bolzens 29 in die Bohrung 37 eingetrieben wird.

Sobald die gewünschte Lage des Preßstiftes 38 erreicht ist, wird das in Fig. 3 obere Stirnende des Preßstiftes 38 durch eine Versiegelung 40 überdeckt.

Eine gleichartige Versiegelung kann auch bei der Ausführungsform der Fig. 2 vorgenommen werden.

Die Federplatten 30 sowie die Ringscheibe 31 wirken mit den Axialbohrungen 25 und 26 und den Vertiefungen 27 und 28 als Drosseln zusammen.

Im Falle einer hydraulischen Strömung vom Raum 24' zum Raum 24" strömt dann das Hydraulikmedium durch einen geringen Freiraum am Außenrand der Ringscheibe 31 vorbei durch die Vertiefung 28 und die Axialbohrungen 26 hindurch und hebt die Federplatten 30 von der Unterseite des Trägerteiles ab. Bei umgekehrter Strömungsrichtung fließt das Hydraulikmedium am Außenrad der Federplatten 30 vorbei durch die Vertiefungen 27 sowie die Axialbohrungen 25 hindurch und hebt dabei die Ringscheibe 31 gegen die Kraft der Schraubendruckfeder 32 an. In beiden Strömungsrichtungen tritt eine Drosselung der Strömung und damit eine Dämpfung der Bewegung des Kolbens des Kolben-Zylinder-Aggregates 4 in Fig. 1 auf.

Außerdem durchsetzt des Hydraulikmedium in beiden Strömungsrichtungen den Bypaßkkanal 33.

Die Feinabstimmung der in beiden Strömungsrichtungen insgesamt auftretenden Drosselwiderstände wird erfindungsgemäß durch die axiale Lage der Einstellschrauben 34 in Fig. 2 bzw. des Preßstiftes 38 in Fig. 3 vorgenommen.

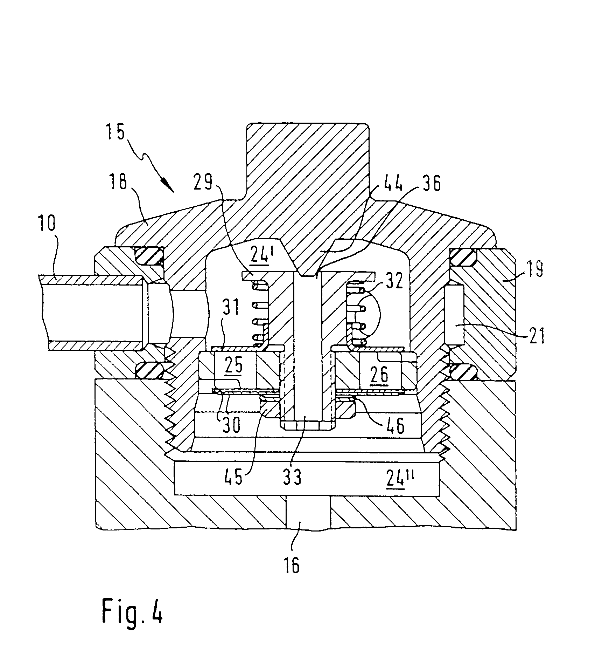

Die in Fig. 4 dargestellte Ausführungsform unterscheidet sich von den Ausführungsformen der Fig. 2 und 3 vor allem dadurch, daß am Anschlußteil 18 anstelle der nach den Fig. 2 und 3 vorgesehenen axial verstellbaren Elemente 34 und 38 ein fest angeordneter bzw. am Anschlußteil 18 angeformter dornartiger Fortsatz 44 angeordnet ist, der mit der zugewandten Öffnung des Bypaßkanales 33 drosselnd zusammenwirkt. Zur Einstellung des Ringspaltes 36 zwischen dem Rand der genannten Öffnung des Bypaßkanales 33 und dem dornartigen Fortsatz 44 ist der Bolzen 29 an seinem in Fig. 4 unteren Bereich mit einem Außengewindeabschnitt versehen. Das Trägerteil 23 weist eine entsprechende Mittelbohrung mit Innengewinde auf, so daß der Bolzen 29 am Trägerteil 23 schraubverstellbar und damit axial einstellbar gehaltert ist. Um die Schraubverstellung vornehmen zu können, ist die in Fig. 4 untere Stirnseite des Bolzens 29 mit Querschlitzen od.dgl. zum Ansetzen eines Schraubendrehers oder eines entsprechenden Werkzeuges versehen.

Die jeweils eingestellte Lage des Bolzens 29 wird durch eine auf dessen Gewindeabschnitt aufdrehbare Kontermutter 45 gesichert, welche gegen die Unterseite des Trägerteiles 23 bzw. einen Federring 46 spannbar ist, der zwischen der Kontermutter 45 und der Unterseite des Trägerteiles 23 auf dem Bolzen 29 angeordnet ist.

Die Kontermutter 45 bzw. der Federring 46 dienen gleichzeitig zur Halterung der an der Unterseite des Trägerteiles 23 angeordneten Federplatte bzw. Federplatten 30.

## Patentansprüche

1. Dämpferventilanordnung, geeignet für eine hydraulische Servolenkung, deren Servomotor (4) als hydrostatisches Motoraggregat bzw. als hydraulisches Verdrängeraggregat ausgebildet ist und auch als Lenkungsdämpfer wirkt, indem in Hydraulikleitungen (10) zwischen Servomotor (4) und Servoventil (9) zumindest eine Dämpferventilanordnung (15) vorgesehen ist, mit zumindest einem durch Dämpferventilelemente gesteuerten bzw. gedrosselten Strömungsweg,
**dadurch gekennzeichnet**,
daß parallel zum Strömungsweg (25,26) ein Bypaßkanal (33) mit einem kalibrierbaren Drosselwiderstand angeordnet ist.

2. Dämpferventilanordnung nach Anspruch 1,
**gekennzeichnet**
durch ein lochscheibenförmiges Trägerteil (23) mit einem zentralen axialen Zapfen (29), der einerseits zur Halterung von gefederten Ventilplatten (31) und/oder Ventilfederplättchen (30) zur Steuerung der von den Löchern (25,26) der Lochscheibe gebildeten Strömungswege dient und andererseits von einem den Bypaßkanal bildenden Axialkanal (33) durchsetzt wird, an dessen einem Stirnende ein einen kalibrierbaren Spalt (36) frei lassendes Drosselelement (34,38) angeordnet ist.

3. Dämpferventilanordnung nach Anspruch 2,
**dadurch gekennzeichnet,**
daß das Trägerteil (23) unverlierbar in einem zur Halterung einer Hydraulikleitung (10) dienenden Anschlußteil (18) mit napfartigem Innenraum (24',24") gleichachsig zur Schraubachse angeordnet ist und den Innenraum zwischen dem offenen Stirnende und dem geschlossenen Stirnende des Anschlußteiles (18) unterteilt, und daß am geschlossenen Stirnende des Anschlußteiles (18) ein axial einstellbarer, gleichachsig zum Bypaßkanal (33) angeordneter Stift (34,38) als Drosselelement angeordnet ist.

4. Dämpferventilanordnung nach Anspruch 3,
**dadurch gekennzeichnet,**
daß der Stift als Einstellschraube (34) in einer Gewindebohrung (35) des Schraubteiles (15) schraubverstellbar angeordnet ist.

5. Dämpferventilanordnung nach Anspruch 3,
**dadurch gekennzeichnet,**
daß der Stift als Preßstift (38) ausgebildet und durch Preßsitz in einer Bohrung (37) im Schraubteil (15) fest gehaltert ist.

6. Dämpferventilanordnung nach Anspruch 4 oder 5,
**dadurch gekennzeichnet,**
daß der Stift (34,38) durch eine Versiegelung (40) gesichert ist.

7. Dämpferventilanordnung nach Anspruch 2,
**dadurch gekennzeichnet,**
daß das Trägerteil (23) unverlierbar in einem zur Halterung einer Hydraulikleitung (10) dienenden Anschlußteil (18) mit napfartigem Innenraum zwischen dem offenen Stirnende und dem geschlossenen Stirnende des Anschlußteiles (18) angeordnet ist und den Innenraum zwischen dem offenen Ende und dem geschlossenen Ende des Anschlußteiles (18) unterteilt, und daß am geschlossenen Stirnende des Anschlußteiles (18) ein zum Bypaßkanal (33) gleichachsiger dornartiger Fortsatz (44) als Drosselelement angeordnet und der den Bypaßkanal (33) aufweisende Zapfen (29) am Trägerteil axial verstellbar gehaltert ist.

8. Dämpferventilanordnung nach Anspruch 7,
**dadurch gekennzeichnet,**
daß der Zapfen (29) mit einem Außengewindeabschnitt in einer Bohrung mit Innengewinde im Trägerteil (23) schraubverstellbar ist.

9. Dämpferventilanordnung nach Anspruch 8,
**dadurch gekennzeichnet**,
daß eine auf dem Außengewindeabschnitt des Zapfens (29) aufdrehbare Kontermutter (45) zur undrehbaren Fixierung des Zapfens (29) am Trägerteil (23) auch zur Halterung zumindest einer Federplatte (30) und/oder eines Federringes (46) dient.

## Claims

1. Damping valve arrangement, suitable for a hydraulic servo-steering device, the servomotor (4) of which is developed as a hydrostatic engine unit or hydraulic displacement unit and which also acts as a steering damping device, in that at least one damping valve arrangement, with at least one flow channel which is controlled or throttled by damping valve elements, is provided in hydraulic pipes (10) between the servomotor (4) and servovalve (9).
characterized in that
a bypass channel (33), with a gaugeable resistance device, is disposed parallel to the flow-channel (25, 26).

2. Damping valve arrangement in accordance with claim 1,
characterized by
an apertured-disk-form support member (23) with a central, axial pin (29) which, on the one hand, serves to hold sprung valve plates (31) and/or valve-spring fillets (30) for controlling the flow-channels formed by apertures (25, 26) of the apertured disks, and which is also passed through by an axial channel (33), which forms the bypass channel, a throttle element (34, 38), which leaves a front end of a gaugeable gap (36) free, being disposed on a front end of the said axial channel (33).

3. Damping valve arrangement in accordance with claim 2,
characterized in that
the support member (23) is immovably disposed on a connection member (18), which serves to hold an hydraulic conduit (10), the said connection member (18) having a basin-form inner cavity (24', 24"), which is coaxial with the threading, between the open and the closed end of the said connection member (18). the said support member (23) dividing up the said inner cavity (24', 24"), between the open end and the closed end of the connection member (18), and in that an axially adjustable pin (34, 38), which has the same axis as the bypass channel (33). is disposed as a throttle element on the closed end of the connection member (18).

4. Damping valve arrangement in accordance with claim 3,
characterized in that
the pin is disposed, such that it can be adjusted by screwing, as an adjustable screw (34), in a threaded boring (35) of the screw member (15).

5. Damping valve arrangement in accordance with claim 3,
characterized in that
the pin is developed as a prisoner pin (38) and is held fast in a boring (37) in the bolt member (15), through a force fit.

6. Damping valve arrangement in accordance with claim 4 or 5,
characterized in that
the pin (34, 38) is secured by means of sealing (40).

7. Damping valve arrangement in accordance with claim 2,
characterized in that
the support member (23) is immovably disposed on a connection member (18), which serves to hold an hydraulic conduit (10), the said connection member (18) having a basin-form inner cavity between the open and the closed end of it, the said support member (23) dividing up the said inner cavity (24', 24"), between the open end and the closed end of the connection member (18), and in that a taper-plug type projection (44), which has the same axis as the bypass channel (33), is disposed as a throttle element at the closed end of the connection member (18), and the pin (29), which has a by-pass channel (33), is held such that it is adjustable, in an axial direction, on the support member.

8. Damping valve arrangement in accordance with claim 7,
characterized in that
the pin (29), with an outer threaded section, can be adjusted, by screwing it, in a boring with inner threading, in the support member (23).

9. Damping valve arrangement in accordance with claim 8,
Characterized in that
A counter nut (45), which can, in order to fix the pin (29) onto the support member (23), be wound onto an outer, threaded section of the pin (29), also serves to hold at least one spring plate (30) and/or a spring washer (46).

## Revendications

1. Dispositif amortisseur à soupapes, convenant pour une servo-direction hydraulique, dont le servomoteur (4) est réalisé sous la forme de groupe moteur hydrostatique ou de groupe à refoulement hydraulique et agit également comme amortisseur de direction, en ce que, dans les conduites hydrauliques (10) est prévu, entre le servomoteur (4) et les soupape d'asservissements (9), au moins un dispositif amortisseur à soupapes (15), avec au moins une voie d'écoulement commandée ou étranglée au moyen d'éléments amortisseurs à soupape,
caractérisé en ce qu'
un canal de dérivation (33), ayant une résistance par étranglement susceptible d'être calibrée, est disposé parallèlement à la voie d'écoulement (25, 26).

2. Dispositif amortisseur à soupapes selon la revendication 1, caractérisé par une partie support (23) en forme de disque perforé, avec un téton axial (29) central qui, d'une part, sert à la fixation de plaques de soupape (31) à montage élastique et/ou de lames élastiques de soupape (30) pour la commande des voies d'écoulement constituées par les trous (25, 26) du disque perforé et, d'autre part, est traversé par un canal axial (33) constituant le canal de dérivation, canal à une extrémité frontale duquel est disposé un élément d'étranglement (34, 38) laissant libre un interstice (36) susceptible d'être calibré.

3. Dispositif amortisseur à soupapes selon la revendication 2, caractérisé en ce que la partie support (23) est disposée de façon imperdable dans une partie de raccordement (18) servant à la fixation d'une conduite hydraulique (10), avec un espace intérieur (24', 24") du genre d'un godet, coaxialement par rapport à l'axe de vis, et subdivise l'espace intérieur entre l'extrémité frontale ouverte l'extrémité frontale fermée de la partie de raccordement (18), et en ce que sur l'extrémité frontale fermée de la partie de raccordement (18) est disposée, à titre d'organe d'étranglement, une tige (34, 38) réglable axialement, disposée coaxialement par rapport au canal de dérivation (33).

4. Dispositif amortisseur à soupapes selon la revendication 4, caractérisé en ce que la tige est disposée de façon réglable par vissage, en faisant office de vis de réglage (34), dans un trou taraudé (35) de la partie à visser (15).

5. Dispositif amortisseur à soupapes selon la revendication 3, caractérisé en ce que la tige est réalisée sous la forme de tige de pressage (38) et est maintenue rigidement, par un ajustement pressé, dans un perçage (37) ménagé dans la partie à visser (15).

6. Dispositif amortisseur à soupapes selon la revendication 4 ou 5, caractérisé en ce que la tige (34, 38) est assurée par un scellage (40).

7. Dispositif amortisseur à soupapes selon la revendication 2, caractérisé en ce que la partie support (23) est disposée de façon imperdable dans une partie de raccordement (18), servant à la fixation d'une conduite hydraulique (10), avec un espace intérieur en forme de godet, entre l'extrémité frontale ouverte et l'extrémité frontale fermée de la partie de raccordement (18), et subdivise l'espace intérieur entre l'extrémité ouverte et l'extrémité fermée de la partie de raccordement (18), et en ce que, à l'extrémité frontale fermée de la partie de raccordement (18), est disposé à titre d'élément d'étranglement un prolongement (44) du genre d'un mandrin, coaxial par rapport au canal de dérivation (33), et le téton (29) présentant le canal de dérivation (33) est fixé de façon réglable axialement sur la partie support.

8. Dispositif amortisseur à soupapes selon la revendication 7, caractérisé en ce que le téton (29) muni d'un tronçon à filetage extérieur est réglable par vissage dans un perçage muni d'un filetage intérieur, réalisé dans la partie support (23).

9. Dispositif amortisseur à soupapes selon la revendication 8, caractérisé en ce qu'un contre-écrou (45), susceptible d'être vissé sur le tronçon à filetage extérieur du téton (29) servant à assurer la fixation, immobilisée en rotation, du téton (29) sur la partie support (23), sert également à la fixation au moins d'une plaque élastique (30) et/ou d'une bague élastique (46).
